# EUROPEAN PATENT APPLICATION

(11) **EP 3 461 539 A1**
(43) Date of publication of application: **03.04.2019**
(21) Application number: 17193425.0
(22) Date of filing: 27.09.2017
(51) Int. Cl.: A63B 21/00, A47K 10/02

(54) **EXERCISE MAT WITH A CONTINUOUS ONE-PIECE ANTI-SLIP STRIP**

(71) Applicant: GROUNDING INC., Tortola (VG)
(72) Inventor: TSAI, Victor, TAIPEI CITY (TW)
(74) Representative: Becker Kurig Straus

(57) **Abstract**

An exercise mat (10)(20)(30) includes a fabric layer (11)(21) defining opposing first surface (111)(211) and second surface (112)(212), an anti-slip strip (13)(23)(33) of a predetermined width and in a predetermined pattern covered over a part of the first surface (111)(211) of the fabric layer so that the first surface (111)(211) of the fabric layer defines one or multiple exposed portions (17)(27)(37) beyond the anti-slip strip (13)(23)(33), and an elastic cushion layer (15)(25) covered over the second surface (112)(212) of the fabric layer. The anti-slip strip (13)(23)(33) is a continuous one-piece member defining two opposite lateral portions and a middle portion (132)(232)(332) at different elevations. The fabric layer defines a plurality of local areas (A) in the first surface (111)(211). At least one exposed portion (17)(27)(37) and a part of the anti-slip strip (13)(23)(33) exist in each local area (A) within a surface area approximately equal to the surface area of the palm of an adult.

## Description

### BACKGROUND OF THE INVENTION

### 1. Field of the Invention

The present invention relates to sports gear technology and more particularly, to an exercise mat with a continuous one-piece anti-slip strip.

### 2. Description of the Related Art

A conventional double-sided anti-slip exercise mat, as disclosed in Taiwan Patent No. 201442676, is characterized in that an anti-slip layer is provided at each of two opposite surfaces of a fabric layer for enabling each of the two opposite surfaces to be partially exposed to the outside. By means of the functioning of the anti-slip layer and the partially exposed design of the fabric layer, the exercise mat provides anti-slip effects regardless of whether the user's skin has sweat (nonslip in wet and dry environmental conditions). We know that when the skin (for example palm surface) of the user gets sweaty, the fabric surface can provide an anti-slip effect, however, the anti-slip layer will become slippery. When the skin of the user is dry, the fabric surface will become slippery, but the anti-slip layer can effectively achieve the expected anti-slip effects. Therefore, the aforementioned conventional technique can achieve an anti-slip effect in wet and dry environmental conditions.

Further, US 2005/0003173 discloses another design of exercise mat, which achieves an anti-slip effect in wet and dry environmental conditions by providing one or both of two opposite surfaces of a fabric layer with a plurality of discrete anti-slip blocks. However, this design can make the user feel that the surface is not flat, causing uncomfortability. Further, because the anti-slip blocks are separated from one another, a higher proportion of the fabric layer is exposed to the outside, the anti-slip effect of the exercise mat is not good when the skin of the user is dry.

Further, when the aforesaid two prior art exercise mats are in use, it is necessary to put an elastic pad at the bottom side so that when the user presses the body, hands or feet on the anti-slip blocks, the elastic pad can be curved inwards to compensate the protruding height of the anti-slip blocks, making the user to feel that the surface is flat. If the user directly puts the exercise mat on a hard supporting surface or hard floor surface without putting an elastic pad beneath the exercise mat, the user will feel a sense of discomfort.

### SUMMARY OF THE INVENTION

The present invention has been accomplished under the circumstances in view. It is the main object of the present invention to provide an exercise mat with a continuous one-piece anti-slip strip, which enables the user to feel a sense of comfort.

It is another object of the present invention to provide an exercise mat with a continuous one-piece anti-slip strip, which has the anti-slip strip configured to provide an uneven surface so as to increase the surface area and to provide a three-dimensional structure, thereby enhancing the anti-slip performance.

To achieve these and other objects of the present invention, an exercise mat with a continuous one-piece anti-slip strip comprises: a fabric layer defining a first surface and an opposing second surface, only one single anti-slip strip of a predetermined width and in a predetermined pattern and covered over a part of the first surface of the fabric layer so that the first surface of the fabric layer defines at least one exposed portion beyond the anti-slip strip, and an elastic cushion layer covered over the second surface of the fabric layer. The anti-slip strip is a continuous one-piece member, defining two opposite lateral portions and a middle portion between the two opposite lateral portions. In one embodiment, the two opposite lateral portions are relatively lower and the middle portion is relatively higher. In another embodiment, the two opposite lateral portions are relatively higher and the middle portion is relatively lower. The fabric layer defines a plurality of local areas in the first surface. Further, at least one exposed portion and a part of the anti-slip strip exist in each local area within a surface area approximately equal to the surface area of the palm of an adult.

Thus, subject to the design and arrangement of the continuous one-piece design of the anti-slip strip, the exercise mat delivers a comfortable sense of touch. Further, the anti-slip strip has an uneven surface so that the total surface area of the anti-slip strip can be relatively increased to provide a three-dimensional structure and to further enhance the anti-slip performance.

Other advantages and features of the present invention will be fully understood by reference to the following specification in conjunction with the accompanying drawings, in which like reference signs denote like components of structure.

### BRIEF DESCRIPTION OF THE DRAWINGS

FIG. 1 is a top view of an exercise mat in accordance with a first embodiment of the present invention.
FIG. 2 is an exploded view of the exercise mat in accordance with the first embodiment of the present invention.
FIG. 3 is a sectional view of a part of the first embodiment of the present invention, illustrating the cross-section of the anti-slip strip.
FIG. 4 is a schematic drawing illustrating a status of use of the exercise mat in accordance with the first embodiment of the present invention.
FIG. 5 is an exploded view of an exercise mat in accordance with a second embodiment of the present invention.
FIG. 6 is a sectional elevational view of the exercise mat in accordance with the second embodiment of the present invention, illustrating the cross-section of the anti-slip strip.
FIG. 7 is a top view of an exercise mat in accordance with a third embodiment of the present invention.
FIG. 8 is a sectional view of a part of the third embodiment of the present invention, illustrating the cross-section of the anti-slip strip.

### DETAILED DESCRIPTION OF THE INVENTION

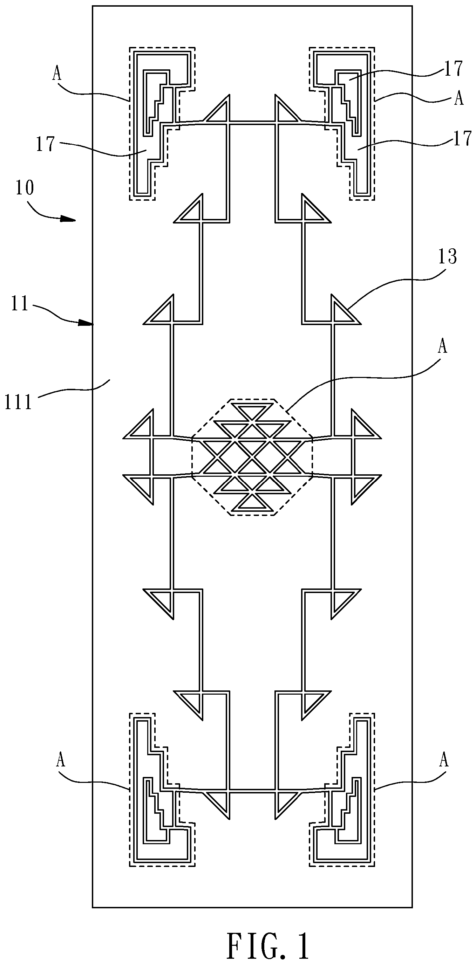

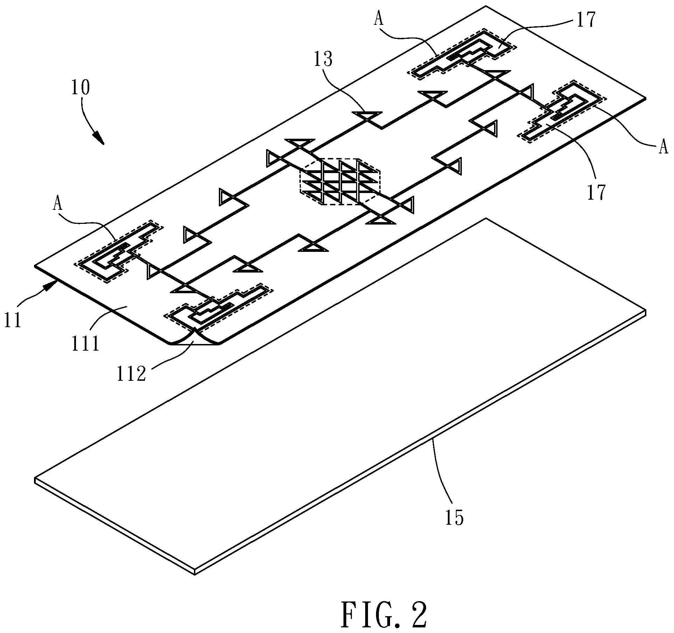

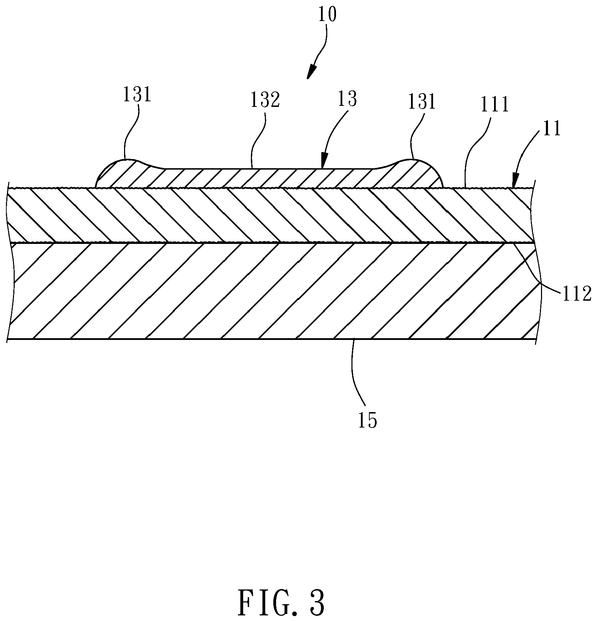

Referring to FIGS. 1-3, an exercise mat **10** in accordance with the present invention is shown. The exercise mat **10** comprises a fabric layer **11,** an anti-slip strip **13** and elastic cushion layer **15.**

The fabric layer **11** defines a first surface **111** and an opposing second surface **112.**

The anti-slip strip **13** has a predetermined width and exhibits a predetermined pattern, and is bonded to the first surface **111** of the fabric layer **11.** The anti-slip strip **13** does not cover the overall first surface **111** of the fabric layer **11** so that the first surface **111** of the fabric layer **11** has a part uncovered and exposed to the outside, i.e., the first surface **111** comprises at least one exposed portion **17.** In this embodiment, the material of the anti-slip strip **13** is silicone.

The elastic cushion layer **15** is mounted on and covered over the second surface **112** of the fabric layer **11** to provide flexibility and cushioning effects. The material of the elastic cushion layer **15** can be thermosetting plastics or thermoplastics. In the selection of thermosetting plastics, polyurethane, epoxy resins, unsaturated polyesters or bakelite is preferred. In the selection of thermoplastics, a composite material can be used. The composite material can be prepared by mixing a soft-segment plastic material with a hard-segment plastic material. The soft-segment plastic material can be selected from the group of natural rubber, ethylene-propylene rubber, butyl rubber, polybutadiene, polyisoprene, polyisobutylene and polyethylene-butene. The hard-segment plastic material can be selected from the group of polyethylene, polystyrene, polypropylene, polyurethane, polyester and polyamide.

The anti-slip strip **13** is a one piece member, having the surface thereof configured to provide two relatively higher opposite lateral sides and a relatively lower middle part. Alternatively, the anti-slip strip **13** can be configured to provide a relatively higher middle part and two relatively lower opposite lateral sides. In this embodiment, the anti-slip strip **13** comprises two relatively higher portions **131** located at two opposite lateral sides and a relatively lower middle portion **132** disposed between the two relatively higher portions **131.** In this embodiment, the thickness of the relatively lower middle portion **132,** of the anti-slip strip **13** is not greater than 1mm. If the relatively lower middle portion **132** is too thick, it will make the user feel a projected thickness. On the contrary, if the relatively lower middle portion **132** is too thin, it may have insufficient structural strength. So, the relatively lower middle portion **132** should have an appropriate thickness. Most preferably, the thickness of the relatively lower middle portion **132** of the anti-slip strip **13** is about 0.2∼0.3mm. In this thickness, the anti-slip strip **13** will not make the user feel awkward. Further, in the present first embodiment, the anti-slip strip **13** is self intersected, providing a plurality of intersections. So, due to self intersection, the anti-slip strip **13** has multiple exposed portions **17.** Further, in this first embodiment, except the intersected locations, the width of the anti-slip strip **13** is consistent in all parts.

Further, the first surface **111** of the fabric layer **11** defines a plurality of local areas **A.** Further, at least one exposed portion **17** and a part of the anti-slip strip **13** exist in each local area **A** within a surface area approximately equal to the surface area of the palm of an adult.

The main structure of the first embodiment of the present invention has been described above, the application of this first embodiment is explained hereinafter.

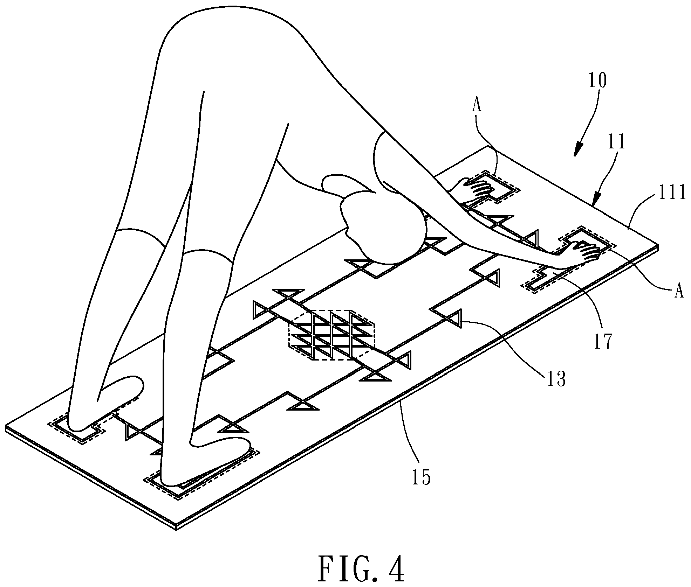

Referring to FIG. 4 and FIGS. 1-3 again, in application, put the exercise mat **10** on the floor with the elastic cushion layer **15** facing downward and kept in contact with the floor. At this time, the user can perform exercises, for example, Yoga exercises on the exercise mat **10.** When exercising, the user will frequently press the palms of the user's hands or the soles of the user's feet on the first surface **111** of the fabric layer **11.** Because the local areas A are located at the regions the palms of the user's hands or the soles of the user's feet will touch, and, at least one exposed portion **17** and a part of the anti-slip strip **13** exist in each local area **A** within a surface area approximately equal to the surface area of the palm of an adult, subject to the arrangement of the anti-slip strip **13,** the exercise mat **10** provides anti-slip effects regardless of whether the user's skin has sweat (nonslip in wet and dry environmental conditions, and thus, the user can perform exercises on the exercise mat **10** at ease without worrying about sliding of the palms or soles.

Further, subject to the design of the relatively higher portion **131** and relatively lower middle portion **132** of the anti-slip strip **13,** the invention increases the surface area of the anti-slip strip **13** for the contact of the user's body skin, providing a three-dimensional structure to enhance the anti-slip performance. Further, subject to the elastic effect of the elastic cushion layer **15,** the anti-slip strip **13** will be forced to curve inwardly toward the inside of the elastic cushion layer **15** when it is pressed by the user, making the user to feel that the surface is flat and enabling the user to feel a sense of comfort.

Since the anti-slip strip **13** is a continuous one piece member, the user will not feel any sense of discomfort due to pressing on an uneven surface, and therefore, the invention provides a more comfortable sense of touch over the prior art designs.

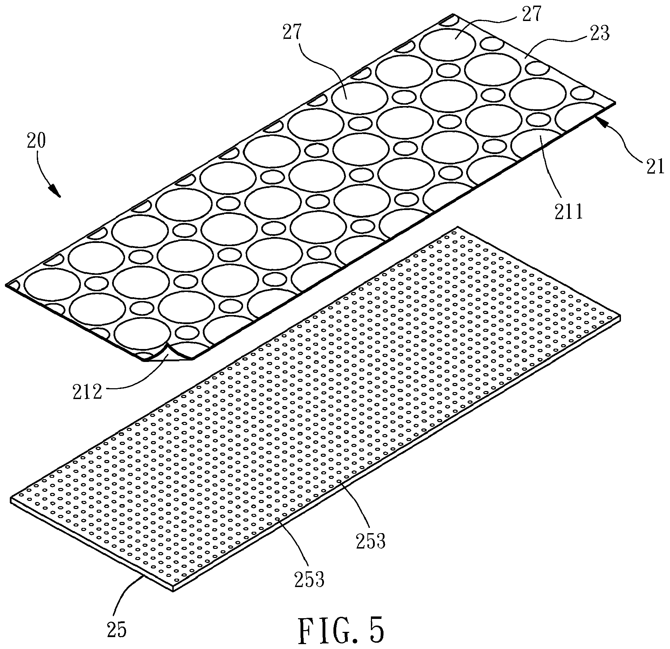

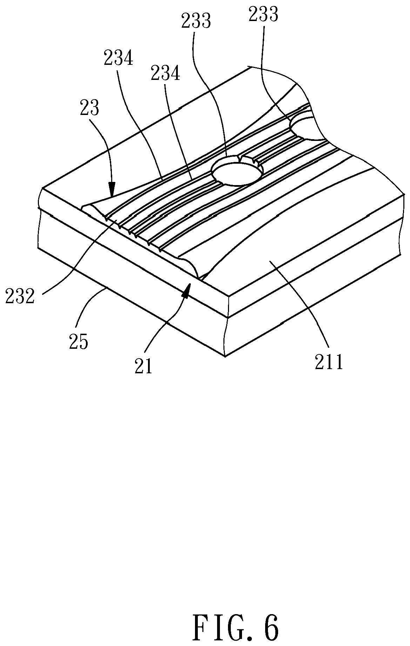

Referring to FIGS. 5 and 6, an exercise mat **20** with a continuous one-piece anti-slip strip in accordance with a second embodiment of the present invention is shown. This second embodiment is substantially similar to the aforesaid first embodiment with the exceptions as follows.

The elastic cushion layer **25** has a plurality of through hole **253** so that the second surface **212** of the fabric layer **21** is partially exposed to the outside through the through holes **253,** facilitating drainage and ventilation.

The anti-slip strip **23** comprises a plurality of grooves **234** in the surface of the relatively lower middle portion **232** thereof so that the relatively lower middle portion **232** exhibits an uneven cross section. The anti-slip strip **23** further comprises a plurality of through holes **233** cut through the relatively lower middle portion **232** so that a part of the first surface **211** of the fabric layer **21** is exposed to the outside through the through holes **233.** Further, the anti-slip strip **23** has an inconstant width portion. Further, the anti-slip strip **23** has contained therein a thermochromic color-changing substance (not shown). This thermochromic color-changing substance is an existing substance known in the art. Since showing the thermochromic color-changing substance of the anti-slip strip **23** in the drawings is difficult, the drawings do not indicate the thermochromic color-changing substance. Thus, when the user's body touches the anti-slip strip **23,** the body temperature will cause the anti-slip strip **23** to change its color, adding visual interest. It is appreciated that the anti-slip strip **23** can also contain other substances, such as fluorescent substance for providing a fluorescent lighting effect, or spices for providing a pleasant smell, or antibacterial deodorant materials, such as metal/ore/coconut shell charcoal/charcoal, etc., for prohibiting the exercise mat from releasing a bad smell or getting moldy smell. Further, sensor means (not shown) can be provided at the bottom side of the anti-slip strip **23** for detecting the user's exercise status. The sensor means can be electrically connected to an electronic device (not shown) for recording the user's exercise status, or generating sound and/or light according to the h user's exercise status.

In the first surface **211** of the fabric layer **21** beyond the local areas A, at least one exposed portion **27** and a part of the anti-slip strip **23** exist in a surface area approximately equal to the surface area of the palm of an adult. Thus, no matter the user touches any surface area of the first surface **211** of the fabric layer **21,** the exercise mat **20** provides anti-slip effects to the user regardless of whether the user's skin has sweat (nonslip in wet and dry environmental conditions).

Thus, in this second embodiment, the arrangement of the grooves **234** and through holes **233** in the anti-slip strip **23** significantly improves drainage and increases the surface area of the anti-slip strip **23,** enhancing the anti-slip performance of the exercise mat. The characteristic of inconstant width of the anti-slip strip **23** makes the overall pattern full of change.

The other structural details and the effects of this second embodiment are same as the aforesaid first embodiment, and thus, no further detailed description in this regard will be necessary.

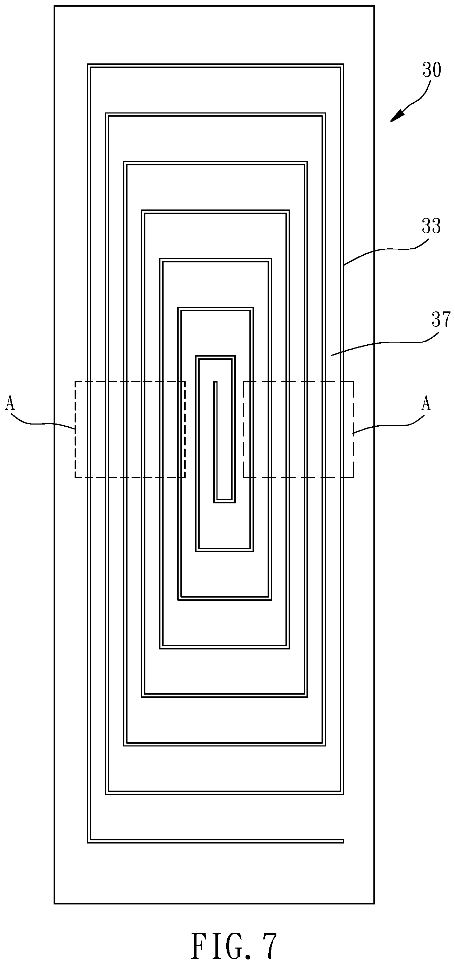

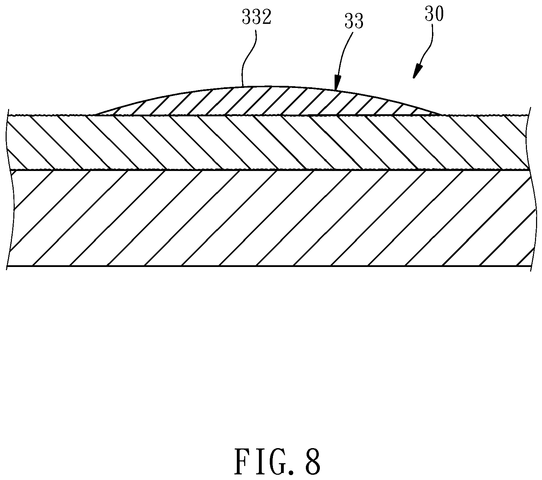

Referring to FIGS. 7 and 8, an exercise mat **30** with a continuous one-piece anti-slip strip in accordance with a third embodiment of the present invention is shown. This third embodiment is substantially similar to the aforesaid first embodiment with the exceptions as follows.

The anti-slip strip **33** of this third embodiment has the two opposite lateral portions thereof relatively lower, and the middle portion **332** thereof relatively higher. Further, the anti-slip strip **33** is made in the form of a single line without intersections.

Thus, this third embodiment has only one single exposed portion **37.** The design of the relatively lower lateral portions and relatively higher middle portion **332** of the anti-slip strip **33** can also increase the surface area of the anti-slip strip **23** and provide a three-dimensional structure to enhance the anti-slip performance.

The other structural details and the effects of this third embodiment are same as the aforesaid first embodiment, and thus, no further detailed description in this regard will be necessary.

## Claims

1. An exercise mat (10)(20)(30), comprising:
a fabric layer (11)(21) defining a first surface (111)(211) and an opposing second surface (112)(212);
only one single anti-slip strip (13)(23)(33) of a predetermined width and in a predetermined pattern, said anti-slip strip (13)(23)(33) being bonded to and covered over a part of said first surface (111)(211) of said fabric layer (11)(21) so that said first surface (111)(211) of said fabric layer (11)(21) defines at least one exposed portion (17)(27)(37) beyond said anti-slip strip (13)(23)(33); and
an elastic cushion layer (15)(25) bonded to and covered over said second surface (112)(212) of said fabric layer (11)(21);
which is **characterized in that**:
said anti-slip strip (13)(23)(33) is a continuous one-piece member defining two opposite lateral portions and a middle portion (132)(232)(332) between said two opposite lateral portions, said two opposite lateral portions and said middle portion (132)(232)(332) being disposed at different elevations;
said fabric layer (11)(21) defines a plurality of local areas (A) in said first surface (111)(211);
at least one said exposed portion (17)(27)(37) and a part of said anti-slip strip (13)(23)(33) exist in each said local area (A) within a surface area approximately equal to the surface area of the palm of an adult.

2. The exercise mat (10)(20)(30) as claimed in claim 1, wherein said elastic cushion layer (15)(25) is selected from the group of thermosetting plastics and thermoplastics, said thermosetting plastic material is selected from the group of polyurethane, epoxy resins, unsaturated polyesters and bakelite.

3. The exercise mat (10)(20)(30) as claimed in claim 2, wherein said thermoplastic material is a composite material prepared by mixing a soft-segment plastic material with a hard-segment plastic material, said soft-segment plastic material being selected from the group of natural rubber, ethylene-propylene rubber, butyl rubber, polybutadiene, polyisoprene, polyisobutylene and polyethylene-butene;said hard-segment plastic material is selected from the group of polyethylene, polystyrene, polypropylene, polyurethane, polyester and polyamide.

4. The exercise mat (20) as claimed in claim 1, wherein said elastic cushion layer (25) comprises a plurality of through holes (253) that expose a part of said second surface (212) of said fabric layer (21) to the outside.

5. The exercise mat (20) as claimed in claim 1, wherein said middle portion (232) of said anti-slip strip (23) has an uneven cross section.

6. The exercise mat (20) as claimed in claim 1, wherein said anti-slip strip (23) further comprises a plurality of grooves (234) located in said middle portion (232).

7. The exercise mat (10)(20)(30) as claimed in claim 1, wherein the thickness of said middle portion (132)(232)(332) of said anti-slip strip (13)(23)(33) is equal to or less than 1mm.

8. The exercise mat (10)(20)(30) as claimed in claim 1, wherein in said first surface (111)(211) of said fabric layer (11)(21) beyond said local areas (A), at least one said exposed portion (17)(27)(37) and a part of said anti-slip strip (13)(23)(33) exist in a surface area approximately equal to the surface area of the palm of an adult.

9. The exercise mat (10)(20)(30) as claimed in claim 1, wherein the main component of said anti-slip strip (13)(23)(33) is silicone.

10. The exercise mat (30) as claimed in claim 1, wherein said anti-slip strip (33) is made in the form of a single line without intersections.

11. The exercise mat (10)(20) as claimed in claim 1, wherein said anti-slip strip (13)(23) is self-intersected, providing a plurality of intersections.

12. The exercise mat (10)(30) as claimed in claim 1, wherein said anti-slip strip (13)(33) has a consistent width in all parts thereof.

13. The exercise mat (20) as claimed in claim 1, wherein said anti-slip strip (23) has an inconsistent width portion.

14. The exercise mat (20) as claimed in claim 1, wherein said anti-slip strip (23) comprises a plurality of through holes (233) cut through said middle portion (232) to expose a part of said first surface (211) of said fabric layer (21) to the outside.

15. The exercise mat (20) as claimed in claim 1, wherein said anti-slip strip (23) contains a thermochromic color-changing substance that changes the color subject to a change in temperature.
